# EUROPEAN PATENT APPLICATION

(11) **EP 1 058 182 A1**
(43) Date of publication of application: **06.12.2000**
(21) Application number: 99959939.2
(22) Date of filing: 21.12.1999
(51) Int. Cl.: G06F 3/14, G06F 3/00, G06F 13/00, G06F 12/00, G06F 17/30, G06F 3/16

(54) **HYPERTEXT DISPLAY DEVICE**

(30) Priority: 21.12.1998 JP 36291998
(71) Applicant: MATSUSHITA ELECTRIC INDUSTRIAL CO., LTD., Kadoma-shi, Osaka 571-0050 (JP); Matsushita Communication Industrial Co., Ltd., Yokohama-shi, Kanagawa 223-0052 (JP); NTT Mobile Communications Network Inc., Minato-ku, Tokyo 105-0001 (JP)
(72) Inventor: SHIN, Hidehiko, Moriguchi-shi Osaka 570-0032 (JP); HISHIDA, Toshihiro, Kobe-shi Hyogo 651-1123 (JP); TANAKA, Yasunori, Takatsuki-shi Osaka 559-1118 (JP); KATO, Atsunobu, Ebina-shi Kanagawa 243-0411 (JP); NAKATSUCHI, Masaharu, Yokohama-shi, Kanagawa 221-0861 (JP); OOSEKI, Eriko, Yokosuka-shi Kanagawa 239-0847 (JP)
(74) Representative: Grünecker, Kinkeldey, Stockmair & Schwanhäusser Anwaltssozietät
(86) International application number: JP9907173
(87) International publication number: WO0038043

(57) **Abstract**

Hypertext documents are analyzed by analysis means (102). Thus, anchor information is extracted therefrom. According to results of analysis, anchor information is selected by selection means (103). It is judged by attribute selection judgment means (105) according to the selected result whether or not an anchor corresponding to the selection means (103) is selected. Attribute activation judgment means (106) then judges whether or not an anchor corresponding to the selection means is activated. When activated, acquisition means (107) acquires data, which is indicated by anchor information from a server (109). Alternatively, focus moving means (108) moves focus to a location in a hypertext document indicated by the anchor information. Thus, only the anchor corresponding to the selection means, such as buttons/keys, can easily be selected. Target data can be quickly displayed.

## Description

### Technical Field

The present invention relates to a hypertext display apparatus, and more particularly to a hypertext display apparatus enabled to move focus to a location of anchor information, which a user wishes to select, of a hypertext document.

### Background Art

A conventional hypertext display apparatus is adapted to move focus to a location of anchor information, which a user wishes to select, of a hypertext document to thereby select this anchor information.

A hypertext document (or HTML document) is a document coded with HyperText Markup Language. Tags indicate layout information. A browser shows HTML documents by interpreting such tags. Additionally, texts, images, and audio can be inserted into an HTML document. Moreover, an HTML document can be linked to an image or to another HTML document. A location, at which the destination of a link is shown, is referred to as an "anchor point". A figure indicating an anchor point is referred to as an anchor. When various kinds of anchor points are set in an HTML document, focus can easily be moved to a location linked to an anchor point.

Pointing an anchor point on a display screen by a mouse cursor or the like is referred to as "selecting an anchor point". A plurality of anchor points on an HTML document are sometimes designated in sequence by using a movement key provided on a remote controller. Moving a pointer to an anchor point in this way is referred to as "focusing". The location of an anchor point focused on a currently displayed HTML document is referred to as a "focus location".

In recent years, with downsizing of devices, anchor information has come to be controlled on a small screen by utilizing attributes included therein. The official gazette No. JP-A-10-293767 discloses a display control method for skipping a specific anchor point at the time of issuing instructions to move focus to anchor points. This method is to forwardly or backwardly move focus to a plurality of anchor points contained in an HTML document in sequence by skipping an anchor point, to which a focus skipping attribute is added, without focusing, during moving focus.

However, in the conventional hypertext display apparatus, an anchor, which a user wishes to select, should be selected by moving focus to a location of this anchor. In the case of a personal digital assistant that has a small screen and a simple selection unit, there is the necessary for operating the personal digital assistant many times so as to move focus to an anchor, which a user wishes to select. Thus, the conventional hypertext display apparatus has a drawback in inconvenience for a user.

An object of the present invention is to eliminate the drawback of the conventional device and to provide a hypertext display apparatus enabled to select a target anchor by a single operation.

### Disclosure of Invention

To eliminate the drawback, according to the present invention, there is provided a hypertext document display apparatus for displaying a hypertext document, which comprises display means for displaying a hypertext document, selection means for selecting an anchor on a hypertext document according to an instruction from a user, analysis means for analyzing a hypertext document and for extracting anchor information, attribute selection judgment means for judging according to outputs of the selection means and the analysis means whether or not an anchor having an attribute corresponding to the selection means is selected, attribute activation judgement means for judging according to an output of the attribute selection judgement means whether or not an anchor having an attribute corresponding to the selection means is activated, and acquisition means for acquiring from a server data, which is indicated by the anchor information, according to an output of the attribute activation judgement means.

With such a configuration, data can be displayed by selecting only an anchor corresponding to the selection means.

Further, this hypertext document display apparatus of the present invention may have focus moving means for moving focus to a location in a hypertext document, which is designated by anchor information selected by the selection means. With such a configuration, focus can be moved only to the location of the anchor corresponding to the selection means.

Moreover, the selection means may be means for allowing a user to select an anchor on a hypertext by depressing a button/key. With such a configuration, only the anchor corresponding to the button/key can be selected.

Furthermore, the selection means may be means for allowing a user to select an anchor on a hypertext by utilizing audio. With such a configuration, only the anchor corresponding to an audio command.

Moreover, the hypertext document display apparatus of the present invention may further comprise button/key selection means for selecting an anchor on a hypertext document according to an instruction from a user, attribute automatic-addition judgment means for judging, in a case that no anchor has a button/key selection attribute, whether or not a button/key selection attribute is added to anchor information of a hypertext document, attribute automatic-addition means for automatically adding button/key selection attributes to anchor information of a hypertext document in sequence from a top portion thereof according to an output of the attribute automatic-addition judgement means, and attribute selection judgement means for judging according to outputs of the analysis means and the button/key selection means whether or not an anchor having a button/key selection attribute is selected.

With such a configuration, attributes corresponding to buttons/keys are selectively imparted to anchors. Thus, only the anchors corresponding to the button/key can be selected.

Furthermore, the hypertext document display apparatus of the present invention may further comprise attribute automatic-addition means for automatically adding button/key attributes to anchor information of a hypertext document in the order in which anchors are displayed. With such a configuration, only the anchors corresponding to the buttons/keys can be selected in the order in which the anchors are displayed.

According to an aspect of the present invention, there is provided a hypertext display apparatus for displaying a hypertext document, which comprises display means for displaying the hypertext document, selection means for selecting an anchor on the hypertext document according to an instruction from a user, analysis means for analyzing the hypertext document and for extracting anchor information, attribute selection judgment means for judging according to outputs of the selection means and the analysis means whether or not an anchor having an attribute corresponding to the selection means is selected, attribute activation judgement means for judging according to an output of the attribute selection judgement means whether or not an anchor having an attribute corresponding to the selection means is activated, and acquisition means for acquiring from a server data, which is indicated by the anchor information, according to an output of the attribute activation judgement means. Further, this hypertext document display apparatus has effects of selecting only an anchor corresponding to the selection means, and judging whether or not an attribute corresponding thereto is activated, and acquiring data from the server.

Furthermore, according to another aspect of the present invention, there is provided a hypertext display apparatus far displaying a hypertext document, which comprises display means for displaying the hypertext document, selection means for selecting an anchor on the hypertext document according to an instruction from a user, analysis means for analyzing the hypertext document and for extracting anchor information, attribute activation judgment means for judging according to outputs of the selection means and the analysis means whether or not an anchor having an attribute corresponding to the selection means is activated, and focus moving means for moving focus to a location in a hypertext document, which is designated by anchor information selected by the selection means. Thus, the hypertext display apparatus has effects of moving focus only to the location of the anchor corresponding to the selection means.

Further, in the aforementioned hypertext display apparatus, the selection means may be means for allowing a user to depress a button/key thereby to select an anchor on the hypertext. Thus, the hypertext display apparatus has effects of selecting only an anchor corresponding to the button/key, and judging whether or not an attribute corresponding thereto is activated, and acquiring data from the server.

Moreover, in the aforementioned hypertext display apparatus, the selection means may be means for allowing a user to select an anchor on a hypertext by utilizing audio. Thus, the hypertext display apparatus has effects of selecting only the anchor corresponding to an audio command, moving focus and judging whether or not an attribute corresponding thereto is activated, and acquiring data from the server.

Furthermore, according to another aspect of the present invention, there is provided a hypertext display apparatus for displaying a hypertext document, which comprises display means for displaying the hypertext document, button/key selection means for selecting an anchor on the hypertext document according to an instruction from a user, analysis means for analyzing the hypertext document and for extracting anchor information, attribute automatic-addition judgment means for judging, in a case where it is found as a result of the analysis that no anchor has the button/key selection attribute, whether or not the button/key selection attribute is added to anchor information of a hypertext document, attribute automatic-addition means for automatically adding button/key selection attributes to anchor information of the hypertext document in sequence from a top portion thereof according to an output of the attribute automatic-addition judgement means, and attribute selection judgement means for judging according to outputs of the analysis means and the button/key selection means whether or not an anchor having a button/key selection attribute is selected. Thus, this hypertext display apparatus has effects of selectively imparting attributes corresponding to buttons/keys to anchors thereby to be enabled to select only the anchors corresponding to the button/key.

Further, according to another aspect of the present invention, there is provided a hypertext display apparatus for displaying a hypertext document, which comprises display means for displaying the hypertext document, button/key selection means for selecting an anchor on the hypertext document according to a button/key instruction issued by a user, analysis means for analyzing the hypertext document and for extracting anchor information, attribute automatic-addition judgment means for judging, in a case where it is found as a result of the analysis that no anchor has the button/key selection attribute, whether or not the button/key selection attribute is added to anchor intonation of the hypertext document, attribute automatic-addition means for automatically adding button/key selection attributes to anchor information of the hypertext document in the order, in which anchors are displayed, according to a result of a judgement by the attribute automatic-addition judgement means, and attribute selection judgement means for judging according to outputs of the analysis means and the button/key selection means whether or not anchor information, which includes information corresponding to the selection means, is selected. Thus, this hypertext display apparatus has effects of selectively imparting attributes corresponding to buttons/keys to anchors in the order, in which the anchors are displayed, thereby to be enabled to select only the anchors corresponding to the button/key.

### Brief Description of Drawings

FIG. 1 is a block diagram illustrating a hypertext display apparatus that is a first embodiment of the present invention;
FIG. 2 is a diagram illustrating a sequence of steps to be performed by the hypertext display apparatus that is the first embodiment of the present invention;
FIG. 3 is a flowchart illustrating an attribute selection judgement process performed in the hypertext display apparatus that is the first embodiment of the present invention;
FIG. 4 is a flowchart illustrating an attribute activation judgement process performed in the hypertext display apparatus that is the first embodiment of the present invention;
FIG. 5 is a block diagram illustrating a hypertext display apparatus that is a second embodiment of the present invention;
FIG. 6 is a diagram illustrating a sequence of steps to be performed by the hypertext display apparatus that is the second embodiment of the present invention; and
FIG. 7 is a flowchart illustrating an attribute automatic-addition judgement process performed in the hypertext display apparatus that is the second embodiment of the present invention.

### Best Mode for Carrying out the Invention

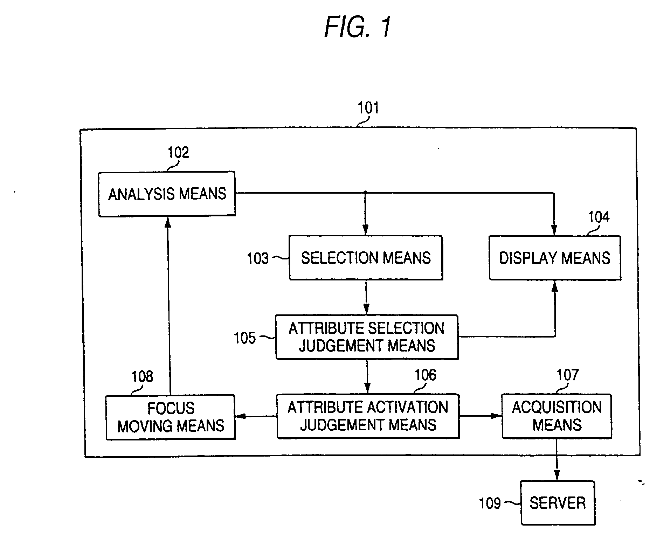

Hereinafter, embodiments of the present invention will be described in detail by referring to FIGS. 1 to 7.

### First Embodiment

A first embodiment of the present invention is a hypertext display apparatus adapted to display a hypertext document, and to select an anchor on the hypertext document according to an instruction from a user, and to analyze the hypertext document, and extract anchor information therefrom, and to acquire from a server data, which is indicated by the anchor information, in the case that an anchor corresponding to the selection means is selected and activated.

FIG. 1 is a block diagram illustrating a hypertext display apparatus that is the first embodiment of the present invention. In FIG. 1, the hypertext display apparatus 101 is operative to analyze and display a hypertext document. Analysis means 102 is operative to analyze a hypertext document. Selection means 103 is operative to select anchor information included in a hypertext document. Display means 104 is operative to display a hypertext document according to results of analysis and attribute selection judgement. Attribute selection judgement means 105 is operative to according to judge according to a result of analysis whether or not anchor information including an attribute, which has information corresponding to the selection means, is selected. Attribute activation judgment means 106 is operative to judge according to a result of attribute selection whether or not anchor information including an attribute, which has information corresponding to the selection means, is activated. Acquisition means 107 is operative to acquire data, which is indicated by anchor information, from a server according to a result of attribute activation judgement. Focus moving means 108 is operative to moving focus indication to a location on a hypertext document, which is indicated by anchor information, according to a result of attribute activation judgement. A server 109 is operative to provide data.

The hypertext display apparatus 101 is adapted so that a hypertext document is analyzed by the analysis means 102 and displayed by the display means 104. The analysis means 102 analyzes a hypertext document. The selection means 103 selects anchor information included in a hypertext document. The attribute selection judgement means 105 judges according to a result of analysis performed by the analysis means 102 whether or not anchor information including attributes, which have information corresponding to the selection means 103, is selected. The display means 104 displays a hypertext document according to results of operations by the analysis means 102 and the attribute selection judgement means 105. The attribute activation judgement means 106 judges according to a result of an operation performed by the attribute selection means 105 whether or not anchor information including an attribute, which has information corresponding to the selection means. The focus moving means 108 moves the indication of focus to a location, which is designated by anchor information, on a hypertext document. The acquisition means 107 acquires data, which is represented by the anchor information, from the server 109 according to a result of judgement by the attribute activation judgement means 106.

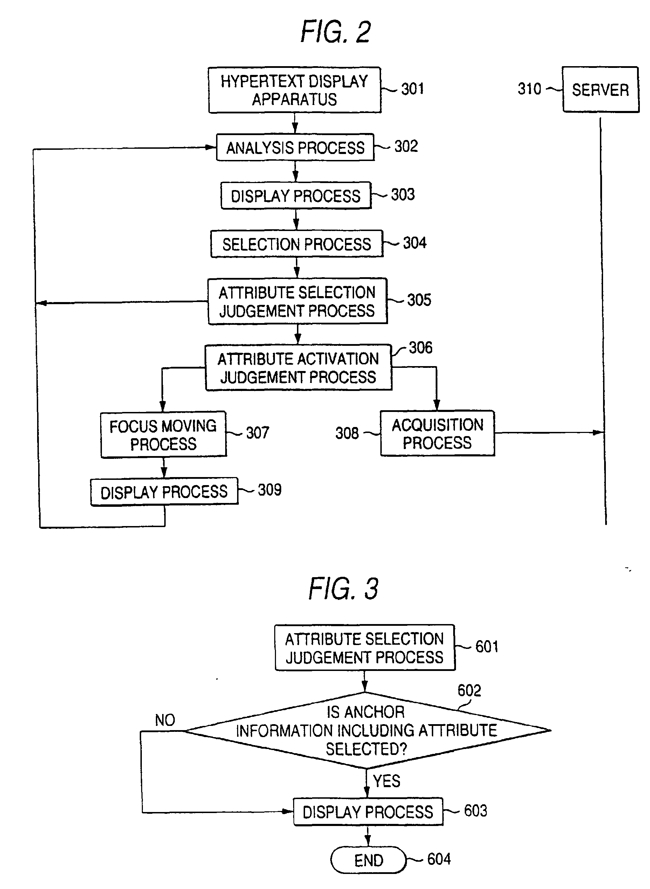

An operation of the hypertext display apparatus, which is constituted as described above, and which is the first embodiment of the present invention, will be described by using a sequence diagram of FIG. 2. The hypertext display apparatus 301 performs an analysis process on a hypertext document (step 302), and displays a hypertext document.

In a display process (step 303), a hypertext document is displayed according to a result of the analysis process (step 302) performed on the hypertext document. This is the same as a display process performed by a Web browser.

In a selection process (step 304), one of the anchors included in the displayed hypertext document in response to depression of the button/key or according to audio instruction information inputted through an audio recognition unit. For example, when the right arrow key of the buttons/keys is depressed, focus is rightwardly moved, so that the next anchor at the right-hand side of the selected anchor is then selected. For example, when an audio instruction to indicate "previous" is issued, focus is returned to the location of the immediately preceding anchor.

In an attribute selection judgement process (step 305), it is judged according to a result of the selection process (step 304) whether or not data corresponding to the anchor information is inputted.

In an attribute activation judgement process (step 306), it is judged according to information described in the hypertext document and to a result of the attribute selection process (step 304) whether or not an anchor having an attribute, which corresponds to the selection process (step 304), is activated. According to a result of this judgement, it is decided which of a focus moving process (step 307) and an acquisition process (step 308) is performed. When a pointer of the anchor represents a link to a location within the document, the focus moving process (step 307) is performed. On the other hand, when this pointer represents a link to a location in another document, the acquisition process (step 308) is performed.

In the focus moving process (step 307), according to a result of the attribute activation process (step 306), the apparatus moving focus to a location in the hypertext document, which is designated by the anchor information selected in the selection process (step 304).

In the acquisition process (step 308), according to a result of the attribute activation judgement process (step 306), data designated by the selected anchor information is acquired from the server 310.

In the display process (step 309), the document is displayed according to a result of the focus moving process (step 307).

Next, an operation of performing the attribute selection judgement process by the first embodiment is described hereunder by using a flowchart of FIG. 3. The attribute selection judgement process (step 601) is to judge whether or not an anchor having a selection attribute is selected. Then, the document is displayed.

In the anchor information selection process (step 602), it is judged whether or not an anchor having a selection attribute is selected. In a display process (step 603), the document is displayed according to a result of the process in step 602. Then, this operation is finished (step 604).

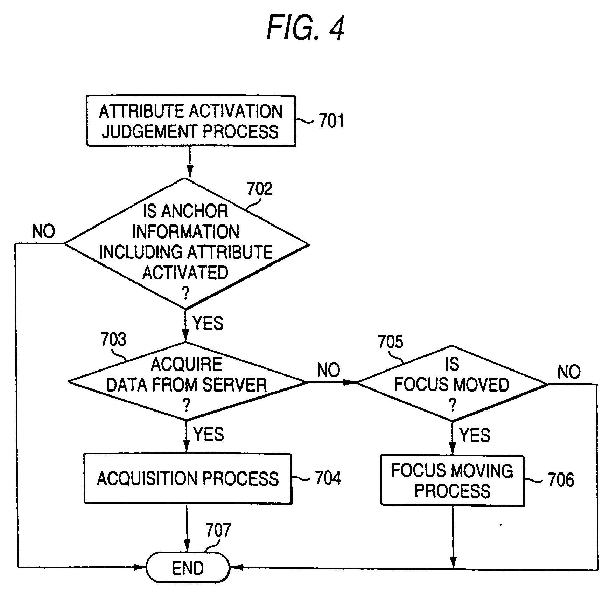

Next, an operation of performing the attribute activation judgement process in the first embodiment is described hereinbelow by using a flowchart of FIG. 4. The attribute activation judgement process is to judge whether or not an anchor having a selection attribute is activated, and to then perform the data acquisition process or the focus moving process according to a result of this judgement.

In an anchor information activation process (step 702), it is judged whether or not an anchor having a selection attribute is activated. If not activated, the operation is finished.

In a data acquisition judgement process (step 703), it is judged from information described in the hypertext document whether or not data indicated by anchor information holding a selection attribute is acquired from a server.

In the acquisition process (step 704), the data indicated by the anchor holding the selection attribute is acquired from the server. Then, this operation is finished (step 707).

In the focus moving judgement process (step 705), it is judged according to information described in the hypertext document whether or not focus is moved to a location on the hypertext document.

In the focus brining process (step 706), focus is moved according to a result of the process performed in step 705. Then, this operation is finished (step 707).

As described above, in the case of the first embodiment of the present invention, the hypertext display apparatus is configured in such a manner as to display a hypertext document, and to select an anchor of the hypertext document according to an instruction from a user, and analyze the hypertext document, and acquire data, which is indicated by anchor information, from the server when an anchor corresponding to the selection means is selected and activated. Thus, target data can be displayed by performing a simple operation and selecting an anchor on the hypertext document.

### Second Embodiment

A second embodiment of the present invention is a hypertext display apparatus adapted to display a hypertext document, and to select an anchor on the hypertext document according to an operation of a button by a user, and to analyze the hypertext document, and to extract anchor information therefrom, and to add a button key selection attribute to the anchor information of the hypertext by judging in the case, in which there is no anchor information having the button/key selection attribute, whether or not the addition of this attribute thereto is performed, and to acquire from a server data, which is indicated by the anchor information, in the case that an anchor having a button/key selection attribute is selected and activated.

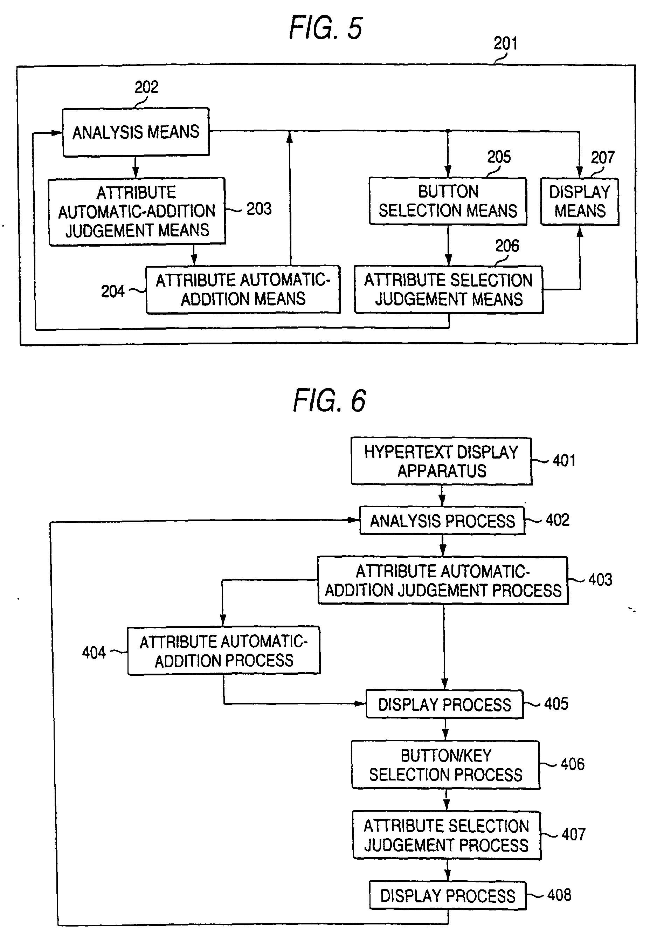

FIG. 5 is a block diagram illustrating a hypertext display apparatus that is the second embodiment of the present invention. In FIG. 5, the hypertext display device 201 is operative to analyze and display a hypertext document. The analysis means 202 is operative to analyze a hypertext document. The attribute automatic-addition judgement means 203 is operative to judge according to information described in a hypertext document whether or not a button selection attribute is automatically added to anchor information. The attribute automatic-addition judgement means 204 is operative to automatically add a button selection attribute to anchor information included in a hypertext document. The button/key selection means 205 is operative to select anchor information, which is included in a hypertext document, by the button/key. The attribute selection judgement means 206 is operative to judge according to a result of an operation, which is performed by the button/key selection means, whether or not an anchor having a button selection attribute is activated. The display means 207 is operative to display a hypertext document according to results of the processes performed by the analysis means and the attribute selection judgement means.

The hypertext display apparatus 201 is configured so that a hypertext document is analyzed by the analysis means 202 and displayed by the display means 207. The attribute automatic-addition judgement means 203 judges from information described in the hypertext document whether or not the button selection attribute is added to the anchor information automatically included in the hypertext document. The attribute automatic-addition means 204 adds the button selection attribute to the anchor information included in the hypertext document. The button/key selection means 205 selects anchor information included in the hypertext document by a button/key. The attribute selection judgement means 206 judges according to a result of the process performed by the button/key selection means 205 whether or not an anchor having a button selection attribute is activated. The display means 207 displays a hypertext document according to results of the processes performed by the analysis means 202 and the attribute selection judgement means 206.

An operation of the hypertext display apparatus, which is configured as described above and the second embodiment of the present invention, will be described hereinbelow by referring to a sequence diagram of FIG. 6. The hypertext display apparatus 401 performs the analysis process on the hypertext document (step 402) and displays the hypertext document.

In the attribute automatic-addition judgement process (step 403), it is judged whether or not the button/key selection attribute is automatically added to a hypertext.

In the attribute automatic-addition process (step 404), the button-key selection attribute is automatically added to the hypertext.

In the display process (step 405), the hypertext document is displayed according to results of the analysis process (step 402) and the attribute selection judgement process (step 403).

In the button/key selection process (step 406), anchor information included in the hypertext document is selected in response to depression of the button/key.

In the attribute selection judgement process (step 407), it is judged according to a result of the button/key selection process (step 406) whether or not data corresponding to the anchor information is inputted.

In the display process (step 408), the hypertext document is displayed according to results of the analysis process (step 402) and the attribute selection judgement process (step 403).

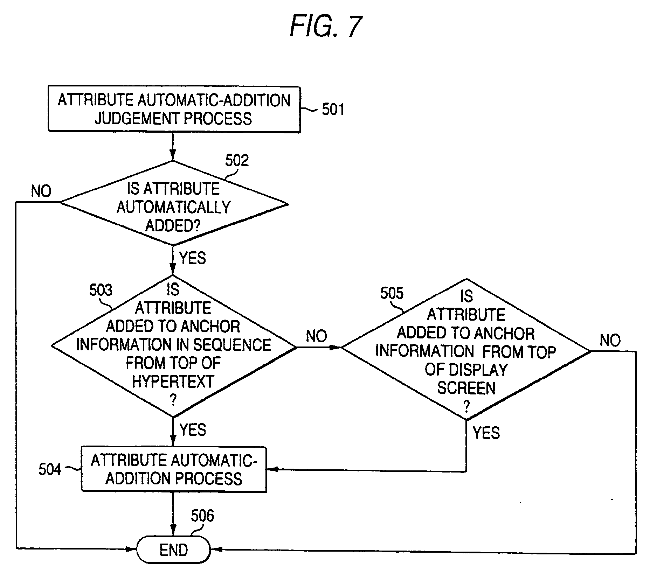

Next, an operation of performing an attribute automatic-addition judgement process in the second embodiment is described hereinbelow by referring to a flowchart of FIG. 7. In the attribute automatic-addition judgement process (step 501), it is judged from information described in the hypertext document whether or not the button selection attribute is automatically added to the anchor information included in the hypertext document.

In the attribute addition judgement process (step 502), it is judged according to intonation described in the hypertext document whether or not the attribute is automatically added to a hypertext document.

In the attribute addition judgement process (step 503), it is judged from the intonation described in the hypertext document whether or not button selection attributes are added to the anchor information in sequence from a top portion of the hypertext document.

In the process (step 505), it is judged from the information described in the hypertext document whether or not the button/key selection attribute is added to the anchor information from the hypertext document.

In the attribute process (step 504), according to information in steps 508 and 505, the button/key selection attribute is added to the anchor information included in the hypertext document.

As described above, in the case of the second embodiment of the present invention, the hypertext display apparatus is configured in such a way as to display a hypertext document, and to select an anchor provided in a hypertext document by a user's button/key operation, and to analyze and extract the hypertext document and to judge, when no anchor information having the button/key selection attributes is present, whether or not the button/key selection attribute is added to the an anchor information corresponding the hypertext document, and to then add the button/key selection attribute to the anchor information, and to acquire and display the data when an anchor having the button/key selection attribute is activated. Thus, a desired hypertext document can be displayed by performing a simple button operation thereby to select and activate the anchor.

### Industrial Applicability

As described above, according to the present invention, there is provided a hypertext document display apparatus for displaying a hypertext document, which comprises display means for displaying a hypertext document, selection means for selecting an anchor on a hypertext document according to an instruction from a user, analysis means for analyzing a hypertext document and for extracting anchor information, attribute selection judgment means for judging according to outputs of the selection means and the analysis means whether or not an anchor having an attribute corresponding to the selection means is selected, attribute activation judgement means for judging according to an output of the attribute selection judgement means whether or not an anchor having an attribute corresponding to the selection means is activated, and acquisition means for acquiring from a server data, which is indicated by the anchor information, according to an output of the attribute activation judgement means. Thus, only the anchor corresponding to the selection means can easily be selected. Even in the case of a personal digital assistant that has a small screen and a simple selection unit, data can be acquired by easily select a target anchor.

Further, there is provided another hypertext display apparatus for displaying a hypertext document, which comprises display means for displaying the hypertext document, selection means for selecting an anchor on the hypertext document according to an instruction from a user, analysis means for analyzing the hypertext document and for extracting anchor information, attribute activation judgment means for judging according to outputs of the selection means and the analysis means whether or not an anchor having an attribute corresponding to the selection means is activated, and focus moving means for moving focus to a location in a hypertext document, which is designated by anchor information selected by the selection means. Thus, target data can easily be displayed by moving focus only to the location of the anchor corresponding to the selection means.

Furthermore, there is provided another hypertext document display apparatus for displaying a hypertext document, which comprises display means for displaying the hypertext document, button/key selection means for selecting an anchor on the hypertext document according to an instruction from a user, analysis means for analyzing the hypertext document and for extracting anchor intonation, attribute automatic-addition judgment means for judging, in a case where it is found as a result of the analysis that no anchor has the button/key selection attribute, whether or not the button/key selection attribute is added to anchor information of a hypertext document, attribute automatic-addition means for automatically adding button/key selection attributes to anchor information of the hypertext document in sequence from a top portion thereof according to an output of the attribute automatic-addition judgement means, and attribute selection judgement means for judging according to outputs of the analysis means and the button/key selection means whether or not an anchor having a button/key selection attribute is selected. Thus, this hypertext display apparatus can selectively impart attributes corresponding to buttons/keys to anchors and can easily select only the anchors corresponding to the button/key.

Further, there is provided another hypertext display apparatus for displaying a hypertext document, which comprises display means for displaying the hypertext document, button/key selection means for selecting an anchor on the hypertext document according to a button/key instruction issued by a user, analysis means for analyzing the hypertext document and for extracting anchor information, attribute automatic-addition judgment means for judging, in a case where it is found as a result of the analysis that no anchor has the button/key selection attribute, whether or not the button/key selection attribute is added to anchor information of the hypertext document, attribute automatic-addition means for automatically adding button/key selection attributes to anchor information of the hypertext document in the order, in which hypertext documents are displayed, according to a result of a judgement by the attribute automatic-addition judgement means, and attribute selection judgement means for judging according to outputs of the analysis means and the button/key selection means whether or not anchor information, which includes information corresponding to the selection means, is selected. Thus, this hypertext display apparatus can selectively impart attributes corresponding to buttons/keys to anchors and can easily select only the anchors corresponding to the button/key.

## Claims

1. A hypertext display apparatus for displaying a hypertext document, comprising:
display means for displaying the hypertext document;
selection means for selecting an anchor on the hypertext document according to an instruction from a user;
analysis means for analyzing the hypertext document and for extracting anchor information;
attribute selection judgment means for judging according to outputs of said selection means and said analysis means whether or not an anchor having an attribute corresponding to said selection means is selected;
attribute activation judgement means for judging according to an output of the attribute selection judgement means whether or not an anchor having an attribute corresponding to said selection means is activated; and
acquisition means for acquiring from a server data, which is indicated by the anchor information, according to an output of said attribute activation judgement means.

2. A hypertext display apparatus for displaying a hypertext document, comprising:
display means for displaying the hypertext document; selection means for selecting an anchor on the hypertext document according to an instruction from a user;
analysis means for analyzing the hypertext document and for extracting anchor information;
attribute activation judgment means for judging according to outputs of said selection means and said analysis means whether or not an anchor having an attribute corresponding to said selection means is activated; and
focus moving means for moving focus to a location in a hypertext document, which is designated by anchor information selected by said selection means.

3. The hypertext display apparatus according to claim 1 or 2, wherein said selection means is a means for allowing a user to depress a button/key thereby to select an anchor on the hypertext.

4. The hypertext display apparatus according to claim 1 or 2, wherein said selection means is a means for allowing a user to select an anchor on a hypertext by utilizing audio.

5. A hypertext display apparatus for displaying a hypertext document, comprising:
display means for displaying the hypertext document;
button/key selection means for selecting an anchor on the hypertext document according to an instruction from a user;
analysis means for analyzing the hypertext document and for extracting anchor information;
attribute automatic-addition judgment means for judging, in a case where it is found as a result of the analysis that no anchor has the button/key selection attribute, whether or not the button/key selection attribute is added to anchor information of the hypertext document;
attribute automatic-addition means for automatically adding button/key selection attributes to anchor information of the hypertext document in sequence from a top portion thereof according to an output of said attribute automatic-addition judgement means; and
attribute selection judgement means for judging according to outputs of said analysis means and said button/key selection means whether or not an anchor having a button/key selection attribute is selected.

6. A hypertext display apparatus for displaying a hypertext document, comprising:
display means for displaying the hypertext document;
button/key selection means for selecting an anchor on the hypertext document according to a button/key instruction issued by a user;
analysis means for analyzing the hypertext document and for extracting anchor information;
attribute automatic-addition judgment means for judging, in a case where it is found as a result of the analysis that no anchor has the button/key selection attribute, whether or not the button/key selection attribute is added to anchor information of the hypertext document;
attribute automatic-addition means for automatically adding button/key selection attributes to anchor information of the hypertext document in an order, in which hypertext documents are displayed, according to a result of a judgement by said attribute automatic-addition judgement means; and
attribute selection judgement means for judging according to outputs of said analysis means and said button/key selection means whether or not anchor information, which includes information corresponding to said selection means, is selected.
